# EUROPÄISCHE PATENTSCHRIFT

(11) **EP 1 135 207 B1**
(45) Veröffentlichungstag und Bekanntmachung des Hinweises auf die Patenterteilung: **09.06.2004**
(21) Anmeldenummer: 99941533.4
(22) Anmeldetag: 06.08.1999
(51) Int. Cl.: B01J 20/12, B01J 20/10, C11B 3/10

(54) **MIKROBIELLE AKTIVIERUNG VON SCHICHTSILICATEN**
MICROBIAL ACTIVATION OF PHYLLOSILICATES
ACTIVATION MICROBIENNE DE PHYLLOSILICATES

(30) Priorität: 30.10.1998 DE 19850129
(43) Veröffentlichungstag der Anmeldung: 26.09.2001
(73) Patentinhaber: SÜD-CHEMIE AG, 80333 München (DE)
(72) Erfinder: FABRY, Christian, Tallahassee, FL 32308 (US); DICK, Stefan, D-86706 Weichering (DE); ZSCHAU, Werner, D-82237 Steinebach (DE)
(74) Vertreter: Westendorp, Michael, Dr.
(86) Internationale Anmeldenummer: PCT/EP1999/005711
(87) Internationale Veröffentlichungsnummer: WO 2000/025910

(56) Entgegenhaltungen:
- EP-A- 0 398 636
- US-A- 1 752 721
- US-A- 2 813 821
- US-A- 3 414 524
- DATABASE WPI Derwent Publications Ltd., London, GB; AN 1993-308929 XP002117807 & JP 05 221631 A (NIKKA KK), 31. August 1993 (1993-08-31)

## Beschreibung

Die Erfindung betrifft ein Verfahren zur Aktivierung von Schichtsilicaten unter Verwendung von Säureproduzierenden Mikroorganismen.

Die US-A-1 492 184 beschreibt die Aktivierung von Rohton mit maximal 10 Gew.-% konzentrierter Säure. Vorzugsweise wird ein vorgetrockneter und gemahlener Rohton imprägniert. Als Beispiele für "Tone" werden Montmorillonit, Bauxit, Willonit, Pyrophyllit, Kaolinit und Fullererde genannt.

Die US-A-1 752 721 beschreibt ein Verfahren zur Behandlung von "earthy materials" zur Erhöhung der Adsorptionseigenschaften, wonach ein Tonmineral mit fester Oxalsäure vermischt und in Abwesenheit von zugesetztem Wasser erhitzt wird, um eine Reaktion zwischen der Oxalsäure und dem Tonmineral zu bewirken. Hierbei wird das Tonmineral mit etwa 1 bis 5% Oxalsäure behandelt.

Die DE-C-304706 beschreibt ein Verfahren zur Erhöhung der Entfärbungskraft von Bleicherde (Fullererde). Bei dem Verfahren wird die Rohbleicherde mit der Säure zu einer teigigen Masse verrührt und anschließend getrocknet.

Database WPI, Derwent Publications Ltd., London, AN 1993-308929 (and JP-A-05221631) beschreiben die Aktivierung eines silicatischen Materials, wobei dieses mit anaeroben Bakterien in einer anaeroben Atmosphäre fermentiert wird. Das erhaltene aktivierte silicatische Material kann als Rohmaterial für Futtermittel, Futtermittelzusätze und Kosmetika, in Düngemitteln, zur Verbesserung des Bodens oder des Trinkwassers, zur Entfernung von überschüssigem Stickstoff im Boden und zur Behandlung von organischem Abwasser eingesetzt werden.

Aus der US-A-4 847 226 ist ein Verfahren zur Behandlung von Ton bekannt, bei dem der Ton extrudiert, vermahlen und einer wäßrigen Säurelösung zugesetzt wird, um eine Suspension zu erzeugen; die Suspension wird erhitzt, worauf der säurebehandelte Ton abgetrennt, gewaschen, abfiltriert und getrocknet wird. Durch die Behandlung soll bezweckt werden, daß der Ton Verunreinigungen aus Flüssigkeiten besser herausfiltriert. Insbesondere sollen öllösliche Farbstoffe aus Ölen entfernt werden.

Der Erfindung lag nun die Aufgabe zugrunde, ein Verfahren zur Aktivierung von Schichtsilicaten bereitzustellen, das ohne die Zugabe von korrosiven, stark ätzenden und wassergefährdenden Säuren durchgeführt werden kann und aus der Sicht der Arbeitssicherheit, des Umweltschutzes und auch aus wirtschaftlicher Sicht dem Stand der Technik überlegen ist.

Es wurde nun überraschenderweise gefunden, daß die Aktivierung von Schichtsilicaten unter Verwendung von Mikroorganismen ohne Zugabe von Säure bzw. einer Säurelösung erfolgen kann.

Die Verwendung säureproduzierender Mikroorganismen zur Restlaugung armer Kupfer-Erze ist bereits im Stand der Technik bekannt. Daneben wird das Wachstum solcher Mikroorganismen auf Erzen wie Pyrit zur Unterstützung der Flotation benutzt. Ein Überblick über diese und weitere Anwendungen zur Erzbehandlung und -aufbereitung sowie zur Metallgewinnung findet sich in C.L. Brierley, Bakterien als Helfer im Bergbau, Spektrum der Wissenschaft: Industrielle Mikrobiologie, 60 (1989).

In der Landwirtschaft wird die bakterielle Oxidation von elementarem Schwefel ausgenutzt, um Sulfat für die Pflanzen zur Verfügung zu stellen und Phosphat und Mikronährstoffe verfügbar zu machen.

Die Verwendung von Mikroorganismen zur Aktivierung von Schichtsilicaten ist im Stand der Technik nicht bekannt.

Gegenstand der Erfindung ist ein Verfahren gemäß Anspruch 1. Unter Aktivierung versteht man die Erhöhung der Bleichaktivität des Schichtsilicats.

Die erfindungsgemäß aktivierten Schichtsilicate können insbesondere als Bleicherden zur Behandlung von Ölen, Fetten oder Wachsen verwendet werden.

Glyceridöle, Wachse und Fette sowie mineralische Öle durchlaufen während ihrer Raffination mit anorganischen Adsorbentien ein bis mehrere adsorptive Behandlungsschritte. Dabei wird das zu behandelnde Öl oder Fett bei erhöhter Temperatur mit einem anorganischen Adsorbens kontaktiert. Das Adsorbens hat dabei die Aufgabe, die bei nachfolgenden Prozessen oder für eine Lagerung nachteiligen Substanzen, wie z.B. Pigmente, Phospholipide, Trübstoffe, Metalle, freie Fettsäuren, oxidierte Verbindungen etc. aus dem Öl zu entfernen. Das Adsorbens benötigt hierzu adsorptive Eigenschaften, z.B. zur Entfernung von Phospholipiden oder Chlorophyll-Körpern, und katalytische Eigenschaften, z.B. zum Abbau von Farbstoffen oder im Öl enthaltenen peroxidischen Verbindungen.

Die erfindungsgemäß hergestellten aktivierten Schichtsilicate können aufgrund ihrer vorteilhaften Eigenschaften, insbesondere der hohen spezifischen Oberfläche und des Sorptions- und Ionenaustauschvermögens, auch in anderen Bereichen Verwendung finden.

Unter die bei dem erfindungsgemäßen Verfahren verwendbaren Schichtsilicate fallen die in Ullmanns Encyklopädie der technischen Chemie, Bd. 21, S. 370-375 (1982) angeführten Schichtsilicate. Insbesondere können die aktivierbaren natürlichen und synthetischen Tonminerale, wie z.B. Smectite einschließlich Montmorillonit, Beidellit, Nontronit, Wolchonskoit, Stevensit, Hectorit, Swinefordit, Saponit und Sauconit, die Vermiculite, die Illite, die Wechsellagerungsminerale (mixed layer minerals), Palygorskit (Attapulgit) und Sepiolith verwendet werden. Die beiden letztgenannten werden auch als Hormite bezeichnet. Die Tonminerale können in der H-, Alkali- oder Erdalkaliform vorliegen.

Nach einer bevorzugten erfindungsgemäßen Ausführungsform handelt es sich bei dem Schichtsilicat um ein Dreischichtsilicat, z.B. um einen natürlich vorkommenden smektitischen Ton, insbesondere einen Bentonit-Ton, oder einen Palygorskit-Ton oder Mischungen daraus.

Palygorskit-Tone umfassen Attapulgit-Tone, die auch als Attapulgus-Tone bekannt sind, oder Georgia-Fullererden. Diese Tone bestehen in der Regel vornehmlich aus dem Mineral Attapulgit, einem kristallinen wasserhaltigen Magnesium-Aluminiumsilicat, können aber auch beträchtliche Mengen anderer Mineralien, wie z.B. Bentonit (Montmorillonit), Calciumcarbonat, Quarz und Feldspat, und in manchen Fällen Sepiolith enthalten. Bevorzugte Tone enthalten wenigstens 10 Gew.-% und bis zu 90 Gew.-% Attapulgit, besonders bevorzugt 20 bis 60 Gew.-%.

Besonders bevorzugt sind uncalcinierte natürlich vorkommende Mischungen aus Palygorskit-Ton und Calciumbentonit-Ton. Derartige natürliche Mischungen können Pyrit enthalten, der als Substrat für schwefel- und eisenoxidierende Bakterien, wie Thiobacillus ferrooxidans, dienen kann.

Nach einer besonders bevorzugten Ausführungsform wird ein Attapulgit/Bentonit-Tongemisch verwendet.

Bei den erfindungsgemäß zur Aktivierung verwendeten Säureproduzierenden Mikroorganismen handelt es sich um Bakterien, Archaebakterien oder Pilze, z.B. der Gattungen Aspergillus, Acidianus, Acidimicrobium, Acidiphilium, Acidobacterium, Acidocella, Alicyclobacillus, Leptospirillium, Metallosphaera, Picrophylus, Sarcina, Stygiolobus, Sulfobacillus, Sulfolobus, Thermoplasma, Thiobacillus und Thiomonas. Neben den hier bevorzugten säureproduzierenden Bakterien, insbesondere den sogenannten Schwefelsäurebakterien, können auch Salpetersäure- und Essigsäurebakterien sowie Mikroorganismen, die Oxalsäure, Citronensäure, Gluconsäure oder andere organische Säuren produzieren, verwendet werden.

Die Verwendung von pyritoxidierenden Bakterien ist besonders vorteilhaft, wenn das eingesetzte Schichtsilicat bereits pyrithaltig ist, so daß dieser Nährstoff für die Bakterien nicht zugesetzt werden muß. Weiterhin wurde gefunden, daß einige natürlich vorkommende Bentonit/Attapulgit-Tongemische bereits von Natur aus Thiobacillus ferrooxidans und Thiobacillus thiooxidans in geringen Mengen enthalten, die sich zur Aktivierung des Schichtsilicats anregen lassen.

Die beiden letztgenannten Bakterienarten sind streng chemolithoautotroph, d.h., ihr Wachstum kann durch Angebot von organischem Material, wie Nährstoffen oder Vitaminen, nicht stimuliert werden. Beide gehören der Gruppe der acidophilen Bakterien an und bevorzugen pH-Werte um 2 sowie Temperaturen um 30°C.

Es können sowohl Wildtyp-Stämme der Säureproduzierenden Mikroorganismen als auch in einem Labor kultivierte Stämme (z.B. Thiobacillus thiooxidans DSMZ-11478; Apergillus niger DSMZ-823; vgl. DSMZ-Katalog, 1998) verwendet werden. Die vorherige Kultivierung der Mikroorganismen bietet den Vorteil, daß eine Adaption an die zur Aktivierung des Schichtsilicats gewählten Bedingungen durchgeführt werden kann. Auch können die Mikroorganismen auf herkömmliche Weise in Bezug auf vorteilhafte Eigenschaften (z.B. schnelles Wachstum unter den zur Aktivierung gewählten Bedingungen) selektiert werden.

Bei der Verwendung aerober Mikroorganismen (wie beispielsweise T. thiooxidans, T. ferrooxidans und A. niger) ist eine ausreichende Versorgung mit Sauerstoff während der Aktivierung des Schichtsilicats sicherzustellen. Dies kann beispielsweise durch regelmäßiges Durchmischen des Schichtsilicats (alle 1 bis 7 Tage) und Vermeiden einer zu starken Kompaktierung sichergestellt werden. Die Durchmischung fördert auch eine gleichmäßige Verteilung, ein raschere Vermehrung und eine höhere Stoffwechselleistung der Mikroorganismen, wodurch die Aktivierung des Schichtsilicats positiv beeinflußt werden kann.

Es wurde gefunden, daß einige natürlich vorkommende Bentonit/-Attapulgit-Tonmischungen bereits geringe Konzentrationen von T. thiooxidans und T. ferrooxidans enthalten. In der Regel wird es jedoch bevorzugt, daß die Bakterien dem Schichtsilicat zugesetzt werden. Dies kann beispielsweise durch Besprühen mit einer konzentrierten Bakterienkultur oder durch Vermengen mit einem Impfmaterial, das eine hohe Bakterienkonzentration aufweist, erfolgen. Als Impfmaterial eignet sich insbesondere eine Probe des zu aktivierenden bzw. des bereits mikrobiell aktivierten Schichtsilicats oder eines Bakteriensubstrats (wie Schwefel oder Pyrit) mit einer Bakterienkonzentration von 10² - 10¹⁰/g Impfmaterial, oder Gemische daraus.

Nach einer erfindungsgemäßen Ausführungsform wird dem Schichtsilicat zum besseren Wachstum der Mikroorganismen Nährsubstrat in Form von Schwefel, Pyrit und/oder einer Nährsalzlösung zugesetzt. Die Zugabe von S ist insbesondere erforderlich, wenn rein schwefeloxidierende Mikroorganismen verwendet werden sollen und das Schichtsilicat von Natur aus keine von dem jeweiligen Mikroorganismus verwertbare Energiequelle (Schwefel- bzw. Eisenquelle) enthält.

Die Behandlung des Schichtsilicats mit den Mikroorganismen wird bei Bedingungen durchgeführt, die für den (die) jeweils verwendeten Mikroorganismus (Mikroorganismen) günstig sind. Diese Bedingungen sind dem Fachmann aus dem einschlägigen Stand der Technik geläufig.

So ist beispielsweise für eine ausreichende Versorgung der Mikroorganismen mit Nährstoffen (z.B. N, K, Ca, Mg, P), Vitaminen, Stoffwechsel substraten, Gasen (z.B. Sauerstoff, Kohlendioxid) usw. zu sorgen. Enthält das zu aktivierende Material von Natur aus zu wenig der von den jeweils verwendeten Mikroorganismen benötigten Stoffe, können diese dem Material zugesetzt werden.

Bei Verwendung von T. ferrooxidans und T. thiooxidans können dem zu aktivierenden Material Nährsalze und/oder energieliefernde Substrate (z.B. Schwefel, Pyrit) zugesetzt werden. Da es sich bei den genannten Bakterien um obligat chemolithoautotrophe Organismen handelt, können diese durch Zusatz von organischen Substraten, Vitaminen oder Nährstoffen nicht stimuliert werden. In einigen Fällen wirkte sich eine Überversorgung insbesondere mit Nährsalzen negativ auf die Aktivität der Mikroorganismen aus.

Bei Verwendung von Aspergillus niger können beispielsweise Glucose, Saccharose oder Melasse als Substrat verwendet werden.

Weiterhin ist auf einen ausreichenden Wassergehalt des Mediums bzw. Schichtsilicats und die Einhaltung einer geeigneten Temperatur zu achten. So werden z.B. bei Verwendung von T. ferrooxidans, T. thiooxidans oder A. niger Temperaturen von etwa 20 bis etwa 35°C, insbesondere etwa 30°C, und ein Wassergehalt von mehr als etwa 15 Gew-%, insbesondere etwa 60 bis 70 Gew.-% des Schichtsilicats, bevorzugt. Es können auch wäßrige Suspensionen verwendet werden.

Zur Kontrolle des Wassergehalts kann es bei Durchführung der Aktivierung im Freien erforderlich sein, vor intensiver Beregnung zu schützen (z.B. durch Lagerung unter einem Dach oder Aufbringen luftdurchlässiger Landwirtschaftsfolien) oder bei trockener Witterung zu beregnen.

Die optimale Aktivierungsdauer ist im Einzelfall von den verwendeten Mikroorganismen, der Art des eingesetzten Schichtsilicats und den Umgebungsbedingungen abhängig und kann vom Fachmann leicht durch empirische Versuche anhand der Bleichaktivität der behandelten Schichtsilicate ermittelt werden. Allgemein wird die mikrobielle Aktivierung des Schichtsilicats über 1 bis 150 Tage durchgeführt. In einigen Fällen kann es jedoch vorteilhaft sein, die mikrobielle Aktivierung über einen längeren Zeitraum, beispielsweise über etwa ein Jahr, durchzuführen. Die Aktivierungsdauer läßt sich häufig verkürzen, indem beispielsweise nach einer Woche die Schichtsilicatstücke erneut mechanisch zerkleinert werden, um neue Oberflächen für die Bakterienbesiedlung zu schaffen.

Nach einer Ausführungsform weist das erfindungsgemäße Verfahren die folgenden Schritte auf: Frischer Rohton wird in Stücke der Größenordnung von etwa 2 cm gebrochen, wodurch eine große Oberfläche geschaffen wird, die für die Mikroorganismen und Luft zugänglich ist. Anschließend wird der Ton mit 5-20% Impfton mit hoher Bakterienkonzentration vermengt bzw. verknetet, wodurch die Besiedlung mit Mikroorgansmen beschleunigt wird. Es werden ca. 10-50 cm hohe Haufen oder Mieten geformt. Ein zu hohes Aufschütten oder Kompaktieren würde eine effektive Durchlüftung verhindern. Während der mikrobiellen Aktivierung werden die Temperatur und der Wassergehalt des Tons kontrolliert und möglichst konstant gehalten. Eine regelmäßige und ausreichende Durchmischung und Durchlüftung des Tons kann z.B. mit einer Fräse alle 1-8 Tage erfolgen. Das Absinken des pH-Werts kann nach Trocknen des Tons oder direkt mit einem BodenpH-Meter gemessen werden. Beim Erreichen des gewünschten Aktivierungsgrades (in der Regel zwischen pH 2 und pH 4) wird ein Teil des aktivierten Tons als Impfton verwendet. Der Rest wird getrocknet und gemahlen, wobei auch die im Ton enthaltenen Mikroorganismen abgetötet werden.

Gegenstand der Erfindung ist weiterhin die Verwendung von Säureproduzierenden Mikroorganismen zur Aktivierung von Schichtsilicaten.

Besonders vorteilhaft an dem erfindungsgemäßen Verfahren ist, daß nicht mit korrosiven, stark ätzenden und wassergefährdenden Säuren umgegangen werden muß. Somit ist es aus Sicht der Arbeitssicherheit und des Umweltschutzes dem Stand der Technik überlegen. Da bei der mikrobiellen Aktivierung nur sehr billige Rohstoffe wie Pyrit (der gegebenenfalls bereits in dem Schichtsilicat enthalten ist); Schwefel und Wasser eingesetzt werden, ist das erfindungsgemäße Verfahren auch aus wirtschaftlicher Sicht überlegen. Auch braucht der Pyrit nicht als hartes Begleitmineral ausgereinigt zu werden.

Es wurde gefunden, daß der pH-Wert bzw. die von den Mikroorganismen freigesetzte Säuremenge nicht strikt mit der Aktivität des behandelten Schichtsilicats korreliert. Dies legt nahe, daß sich die erfindungsgemäße mikrobielle Aktivierung von der reinen Säureaktivierung unterscheidet und noch weitere Stoffwechselprodukte beteiligt sind.

Durch die von den verwendeten Mikroorganismen produzierten Fe-Chelatoren können im aktivierten Schichtsilicat vorhandene freie Eisenionen, die bei der Ölbleichung stören können, komplexiert werden. Weiterhin komplexieren viele der mikrobiellen organischen Säuren mehrwertige Kationen wie Al³⁺ oder Ca²⁺, wodurch diese aus dem Gleichgewicht entfernt werden und die Aktivierung des Schichtsilicats begünstigt wird.

Durch die Mikroorganismen wird zudem freies Phosphat in organische Verbindungen eingebaut, die zusammen mit den Mikroorganismen fest an dem Schichtsilicat haften, so daß die Phosphatbelastung des zu bleichenden Öls verringert wird.

Weiterhin können störende Kationen durch Aufnahme in die Mikroorganismen fixiert werden (sog. "Bioakkumulation"). Bei Thiobakterien ist die Akkumulation von Cd²⁺, Co²⁺, Cu²⁺, Cr³⁺, Fe³⁺ und Ni²⁺ nachgewiesen, bei A. niger die Akkumulation von Radionukliden, Co²⁺, Cu²⁺ und Zn²⁺.

Auch kommt es durch die Mikroorganismen zu einer Hydrophobierung der Mineraloberfläche. Die erhöhte Hydrophobie der Oberfläche des Schichtsilicats kann zu einer besseren Benetzung der Bleicherdepartikel durch die zu bleichenden Öle führen.

Weitere Vorteile können auf die gleichmäßige in situ Aktivierung durch die Mikroorganismen und die allmähliche Freisetzung von Säuren bzw. Stoffwechselprodukten zurückzuführen sein. Da die bevorzugt verwendeten Mikroorganismen wie T. ferrooxidans und T. thiooxidans bei zu niedrigen pH-Werten (z.B. kleiner 1,5) nicht mehr wachsen, kann auch ein zu hoher Restsäuregehalt im aktivierten Schichtsilicat, der bei der Bleichung von Ölen nachteilig ist, vermieden werden. Sobald der pH-Wert zu stark absinkt, stellen die Mikroorganismen ihr Wachstum und die Säureproduktion ein. Die Mikroorganismen wirken somit bei der Aktivierung des Schichtsilicats wie ein internes Regelsystem. Auf diese Weise können auch lokale pH-Spitzen, die bei externer Säurezugabe leicht auftreten, vermieden werden.

Auch der Abbau des im Rohton enthaltenen Pyrits, das von T. ferrooxidans während der Aktivierung als Nährsubstrat verwertet wird, kann bei einigen Anwendungen der aktivierten Schichtsilicate von Vorteil sein, da der Pyrit beim Vermahlen der Bleicherde eine Abrasionswirkung zeigt.

Die nachstehenden Ausführungsbeispiele sollen die Erfindung erläutern und die Vorteile gegenüber dem Stand der Technik aufzeigen. Die Erfindung ist aber nicht auf die nachstehenden Beispiele beschränkt.

### Beispiele

### Beispiele 1 - 6

Als Ausgangsmaterial für die Vergleichsbeispiele 1 und 2 sowie die Beispiele 3 - 6 wurde ein frisch abgebauter Attapulgit (Palygorskit)-Bentonit-Ton mit einem Feststoffgehalt von 44% verwendet. Laut röntgenographischer Phasenanalyse und chemischer Zusammensetzung besteht dieser Ton aus 55% Palygorskit, 35% Ca-Montmorillonit, 5% Quarz, 3% Calcit und 1,5% Pyrit. Der Ton wurde mechanisch auf eine Korngröße von etwa 2 cm zerkleinert. Dieser so behandelte Ton wird im folgenden als Rohton A bezeichnet.

### Beispiel 1 (Vergleich)

Eine Probe des Rohtons A wurde bei 80°C bis zu einem Wassergehalt von 15% getrocknet, auf einen Siebrückstand (64 µm) von 25% vermahlen und anschließend bei 110°C auf einen Wassergehalt von 8% getrocknet. Der pH-Wert der Probe wurde nach Suspendieren von 8 Teilen Probe in 100 Teilen Wasser mit Hilfe einer pH-Meßelektrode gemessen.

Zur Ermittlung der Aktivität der Probe bei der Pflanzenölbleichung wurden Bleichversuche an Rapsöl (100 g Öl; 0,75 g Probe; p=30 mbar; T=110°C; t=30 min) und Sojaöl (100 g Öl; 0,50 g Probe; p=30 mbar; T=100°C; t=30 min) durchgeführt. Die Bleichaktivität wurde anhand der an einem Lovibond Farbmeßgerät ermittelten Rotwerte sowie der spektrophotometrisch gemessenen Chlorophyllkonzentrationen beurteilt. In beiden Fällen bedeuten kleinere werte eine größere Bleichaktivität. Die Ergebnisse sind in den Tabellen I (Rapsölbleichung) und II (Sojaölbleichung) angegeben; bei allen Zahlenangaben handelt es sich um Mittelwerte aus drei Versuchen.

### Beispiel 2 (Vergleich)

340 g Rohton A wurden mit 50 ml Wasser und 3 g konz. Schwefelsäure 5 min. intensiv verknetet. Danach wurde das Produkt wie in Vergleichsbeispiel 1 getrocknet und vermahlen. Die Messung des pH-Werts und der Bleichaktivität erfolgte wie in Vergleichsbeispiel 1. Die Ergebnisse sind in den Tabellen I und II angegeben.

### Beispiel 3

340 g Rohton A wurden mit 110 ml Wasser vermischt und mit Hilfe steriler Holzspatel homogenisiert. Anschließend wurde in einem Klimaschrank bei konstant 30°C und 100% Luftfeuchtigkeit inkubiert. Die Homogenisierung der Probe wurde einmal wöchentlich wiederholt. Jede Woche wurde ein geringer aliquoter Anteil entnommen und der pH-Wert, wie in Vergleichsbeispiel 1 beschrieben, gemessen.

Nachdem keine Änderung des pH-Werts mehr feststellbar war (68d), wurde das Produkt wie in Vergleichsbeispiel 1 getrocknet und vermahlen. Die Messung des pH-Werts und der Bleichaktivität an Rapsöl erfolgte wie in Vergleichsbeispiel 1. Die Ergebnisse sind in Tabelle I angegeben.

### Beispiel 4

340 g Rohton A wurden wie in Beispiel 3 beschrieben inkubiert. Nach 42d wurden 45 g dieses Materials entnommen und mit 340 g frischem Rohton A sowie 110 ml Wasser vermischt und mit Hilfe steriler Holzspatel homogenisiert. Anschließend wurde in einem Klimaschrank bei konstant 30°C und 100% Luftfeuchtigkeit inkubiert. Die Homogenisierung der Probe wurde einmal wöchentlich wiederholt. Jede Woche wurde ein geringer aliquoter Anteil entnommen und der pH-Wert, wie in Vergleichsbeispiel 1 beschrieben, gemessen.

Nachdem keine Änderung des pH-Werts mehr feststellbar war (21d), wurde das Produkt wie in Vergleichsbeispiel 1 getrocknet und vermahlen. Die Messung des pH-Werts und der Bleichaktivität an Rapsöl erfolgte wie in Vergleichsbeispiel 1. Die Ergebnisse sind in Tabelle I angegeben.

### Beispiel 5

Zu 100 ml eines Nährmediums aus 2,00 g/l (NH₄)₂SO₄, 0,50 g/l, K₂HPO₄, 0,50 g/l MgSO₄*7H₂O, 0,10 g/l KCl und 0,01 g/l Ca(NO₃)₂, das mit Schwefelsäure auf einen pH-Wert von 2 eingestellt worden war, wurden 1 ml Bakteriensuspension (Thiobacillus ferrooxidans; DSMZ-Stamm 11477) und 7,0 g Pyrit (Teilchengrößes < 64 µm) gegeben. Durch diese Mischung wurde bei 30°C so lange ein Luftstrom geleitet, bis der pH-Wert der Lösung auf 1,75 abgesunken war. Der Pyrit wurde von der Lösung durch Zentrifugieren bei 1500 g (5 min) abgetrennt, mit 100 ml Wasser aufgeschlämmt und erneut zentrifugiert. Aus den vereinten Zentrifugaten wurden die Bakterienzellen durch Zentrifugieren bei 8000 g (15 min) geerntet und in 110 ml Wasser suspendiert.

340 g Rohton A wurden unter Standardbedingungen (T = 120°C; p=2bar; t=30min) autoklaviert, um die im Rohton enthaltenen Mikroorganismen abzutöten. Anschließend wurde der Rohton mit 110 ml Bakteriensuspension vermischt und mit Hilfe steriler Holzspatel homogenisiert, worauf er in einem Klimaschrank bei konstant 30°C und 100% Luftfeuchtigkeit inkubiert wurde. Die Homogenisierung der Probe wurde einmal wöchentlich wiederholt. Jede Woche wurde ein geringer aliquoter Anteil entnommen und der pH-Wert, wie in Vergleichsbeispiel 1, beschrieben gemessen. Nachdem keine Änderung des pH-Werts mehr feststellbar war (56d), wurde das Produkt wie in Vergleichsbeispiel 1 getrocknet und vermahlen. Die Messung des pH-Werts und der Bleichaktivität an Rapsöl erfolgte wie in Vergleichsbeispiel 1. Die Ergebnisse sind in Tabelle I angegeben.

### Beispiel 6

Zu 110 ml eines sterilen Nährmediums aus 1,60 g/l NH₄NO₃, 0,30 g/l K₂HPO₄, 0,20 g/l MgSO₄PH*7H₂O und 6,50 g Glucose, das mit Schwefelsäure auf einen pH-Wert von 4,0 eingestellt worden war, wurden Sporen von Aspergillus niger (DSMZ-Stamm 823) gegeben. Durch diese Mischung wurde bei 30°C so lange ein Luftstrom geleitet, bis der pH-Wert der Lösung auf 3,0 abgesunken war.

340 g Rohton A wurden unter Standardbedingungen (T = 120°C; p=2bar; t=30min) autoklaviert, um die im Rohton enthaltenen Mikroorganismen abzutöten. Anschließend wurde der Rohton mit der Pilzsuspension vermischt und mit Hilfe steriler Holzspatel homogenisiert, worauf er in einem Klimaschrank bei konstant 30°C und 100% Luftfeuchtigkeit inkubiert wurde. Die Homogenisierung der Probe wurde täglich wiederholt. Jede Woche wurde ein geringer aliquoter Anteil entnommen und der pH-Wert, wie in Vergleichsbeispiel 1 beschrieben, gemessen. Nachdem keine Änderung des pH-Werts mehr feststellbar war (21d), wurde das Produkt wie in Vergleichsbeispiel 1 getrocknet und vermahlen. Die Messung des pH-Werts und der Bleichaktivität an Sojaöl erfolgte wie in Vergleichsbeispiel 1. Die Ergebnisse sind in Tabelle II angegeben.

### Beispiele 7 - 11

Als Ausgangsmaterial für die Vergleichsbeispiele 7 - 9 und die Beispiele 10 -11 wurde ein südamerikanischer Bentonit mit einem Feststoffgehalt von 60% verwendet. Laut röntgenographischer Phasenanalyse und chemischer Zusammensetzung besteht dieser Ton zu 90% aus ungeordneten Smectit-Illit-Wechsellagerungsmineralen, 2% Quarz, 2% Calcit und 6% Feldspat. Der Ton wurde mechanisch auf eine Korngröße von etwa 2 cm zerkleinert. Dieser so behandelte Ton wird im folgenden als Rohton B bezeichnet.

### Beispiel 7 (Vergleich)

Eine Probe des Rohtons B wurde bei 80°C bis zu einem Wassergehalt von 15% getrocknet, auf einen Siebrückstand (64 *µ*m) von 25% vermahlen und anschließend bei 100°C auf einen Wassergehalt von 8% getrocknet. Der pH-Wert der Probe wurde nach Suspendieren von 8 Teilen Probe in 100 Teilen Wasser mit Hilfe einer pH-Meßelektrode gemessen.

Zur Ermittlung der Aktivität der Probe bei der Pflanzenölbleichung wurden Bleichversuche an Rapsöl (100 g Öl; 0,75 g Probe; p=30 mbar; T=110°C; t=30 min) und Sojaöl (100 g Öl; 0,50 g Probe; p=30 mbar; T=100°C; t=30 min) durchgeführt. Die Bleichaktivität wurde anhand der an einem Lovibond Farbmeßgerät ermittelten Rotwerte sowie der spektrophotometrisch gemessenen Chlorophyllkonzentrationen beurteilt. In beiden Fällen bedeuten kleinere Werte eine größere Bleichaktivität. Die Ergebnisse sind in den Tabellen I (Rapsölbleichung) und II (Sojaölbleichung) angegeben; bei allen Zahlenangaben handelt es sich um Mittelwerte aus drei Versuchen.

### Beispiel 8 (Vergleich)

250 g Rohton B wurden mit 120 ml Wasser und 3 g konz. Schwefelsäure 5 min. intensiv verknetet. Danach wurde das Produkt wie in Vergleichsbeispiel 7 getrocknet und vermahlen. Die Messung des pH-Werts und der Bleichaktivität an Soja- und Rapsöl erfolgte wie in Vergleichsbeispiel 7. Die Ergebnisse sind in den Tabellen I und II angegeben.

### Beispiel 9 (Vergleich)

250 g Rohton B wurden mit 125 ml Wasser vermischt und mit Hilfe steriler Holzspatel homogenisiert. Anschließend wurde in einem Klimaschrank bei konstant 30°C und 100% Luftfeuchtigkeit inkubiert. Die Homogenisierung der Probe wurde einmal wöchentlich wiederholt. Jede Woche wurde ein geringer aliquoter Anteil entnommen und der pH-Wert, wie in Vergleichsbeispiel 7 beschrieben, gemessen.

Nach 68 d wurde das Produkt wie in Vergleichsbeispiel 7 getrocknet und vermahlen. Die Messung des pH-Werts und der Bleichaktivität an Soja- und Rapsöl erfolgte wie in Vergleichsbeispiel 7. Die Ergebnisse sind in den Tabellen I und II angegeben.

### Beispiel 10

340 g Rohton A wurden wie in Beispiel 3 beschrieben inkubiert.

Nach 42d wurden 46 g dieses Materials entnommen und mit 250 g Rohton B, 7 g Pyrit sowie 125 ml Wasser vermischt und mit Hilfe steriler Holzspatel homogenisiert. Anschließend wurde in einem Klimaschrank bei konstant 30°C und 100% Luftfeuchtigkeit inkubiert. Die Homogenisierung der Probe wurde einmal wöchentlich wiederholt. Jede Woche wurde ein geringer aliquoter Anteil entnommen und der pH-Wert, wie in Vergleichsbeispiel 7 beschrieben, gemessen.

Nachdem keine Änderung des pH-Werts mehr feststellbar war (42d), wurde das Produkt wie in Vergleichsbeispiel 7 getrocknet und vermahlen. Die Messung des pH-Werts und der Bleichaktivität an Soja- und Rapsöl erfolgte wie in Vergleichsbeispiel 7. Die Ergebnisse sind in den Tabellen I und II angegeben.

### Beispiel 11

340 g Rohton A wurden wie in Beispiel 3 beschrieben inkubiert.

Nach 42d wurden 46 g dieses Materials entnommen und mit 250 g Rohton B, 7 g Schwefel sowie 125 ml Wasser vermischt und mit Hilfe steriler Holzspatel homogenisiert. Anschließend wurde in einem Klimaschrank bei konstant 30°C und 100% Luftfeuchtigkeit inkubiert. Die Homogenisierung der Probe wurde einmal wöchentlich wiederholt. Jede Woche wurde ein geringer aliquoter Anteil entnommen und der pH-Wert, wie in Vergleichsbeispiel 7 beschrieben, gemessen.

Nachdem keine Änderung des pH-Werts mehr feststellbar war (56d), wurde das Produkt wie in Vergleichsbeispiel 7 getrocknet und vermahlen. Die Messung des pH-Werts und der Bleichaktivität erfolgte wie in Vergleichsbeispiel 7. Die Ergebnisse sind in den Tabellen I und II angegeben.

**Tabelle I:**

| **Rapsölbleichung** | | | | | |
|---|---|---|---|---|---|
| | **pH** | **Rotwert** | **Chlorophyll A** | **Zeit** | **Kurzbeschreibung** |
| | | | **[ppb]** | **[d]** | |
| **Vergleichsbelspiel 1** | 6,9 | 5,5 | 650 | 0 | Rohton A |
| **Vergleichsbeispiel 2** | 2,8 | 4,4 | 300 | 0 | Rohton A + Schwefelsäure |
| **Beispiel 3** | 3,4 | 4,2 | 225 | 68 | Rohton A inkubiert |
| **Beispiel 4** | 3,4 | 4,1 | 220 | 21 | Rohton A + Impfton |
| **Beispiel 5** | 3,4 | 4,3 | 240 | 56 | Rohton A geimpft mit DSMZ-Stamm |
| **Vergleichsbeisplei 7** | 8,4 | 7,8 | 800 | 0 | Rohton B |
| **Vergleichsbeispiel 8** | 2,3 | 4,6 | 310 | 0 | Rohton B + Schwefelsäure |
| **Vergleichsbeispiel 9** | 8,2 | 7,8 | 790 | 68 | Rohton B inkubiert |
| **Beispiel 10** | 2,6 | 4,2 | 220 | 42 | Rohton B + Pyrit + Impfton |
| **Beispiel 11** | 2,8 | 4,4 | 290 | 56 | Rohton B + Schwefel + Impfton |

**Tabelle II:**

| **Sojaölbleichung** | | | | | |
|---|---|---|---|---|---|
| | **pH** | **Rotwert** | **Chlorophyll A** | **Zeit** | **Kurzbeschreibung** |
| | | | **[ppb]** | **[d]** | |
| **Verglelchsbeispiel 1** | 6,9 | 6.4 | 290 | 0 | Rohton A |
| **Vergleichsbeispiel 2** | 2,8 | 6,7 | 180 | 0 | Rohton A + Schwefelsäure |
| **Beispiel 6** | 3,4 | 6,0 | 170 | 21 | Rohton A geimpft mit A₊.niger |
| **Vergleichsbeispiel 7** | 8,4 | 14,0 | 680 | 0 | Rohton B |
| **Vergleichsbeispiel 8** | 2,3 | 9,2 | 170 | 0 | Rohton B + Schwefelsäure |
| **Vergleichsbeispiel 9** | 8.2 | 13,8 | 690 | 68 | Rohton B inkubiert |
| **Beispiel 10** | **2,6** | **6,2** | **150** | 42 | Rohton B + Pyrit + Impfton |
| **Beispiel 11** | 2,8 | **6,5** | 170 | 56 | Rohton B + Schwefel + Impfton |

Wie aus Tabelle I ersichtlich ist, konnten in Beispiel 3 die in Rohton A vorhandenen Wildstammpopulationen von T. ferrooxidans und T. thiooxidans durch geeignete Bedingungen zur Aktivierung des Schichtsilicats veranlaßt werden. Die erhaltene aktivierte Bleicherde zeigte gute Ergebnisse bei der Rapsölbleichung und übertraf bei den Rotwerten und der Entfernung von Chlorophyll sowohl den Rohton A (Vergleichsbeispiel 1) als auch eine nach dem Stand der Technik durch Aktivierung mit konzentrierter Schwefelsäure hergestellte Bleicherde (Vergleichsbeispiel 2).

Wie Beispiel 4 zeigt, kann die Aktivierungsdauer von Rohton A durch Vermischen mit Impfton, der bereits große Wildstammpopulationen von T. ferrooxidans und T. thiooxidans enthält, bei gleich guter Bleichaktivität in Rapsöl drastisch verringert werden.

Eine zusätzliche Zugabe einer Nährsalzlösung zu den Rohtonproben der Beispiele 3 und 4 führte nicht zu einer vergrößerten Aktivität der Bakterien in den ersten 30 Tagen. Dies kann darauf zurückzuführen sein, daß die im Rohton A vorhandenen Wildstammpopulationen von T. ferrooxidans und T. thiooxidans seit vielen Generationen an sehr geringe Nährsalzmengen adaptiert sind.

Beispiel 5 zeigt, daß neben Wildstämmen auch kultivierte Stämme von T. ferrooxidans zur Aktivierung des Schichtsilicats in Rohton A geeignet sind. Die längere Dauer der Aktivierung im Vergleich zu Beispiel 4 kann darauf zurückzuführen sein, daß sich die an höhere Nährsalzkonzentrationen gewohnten Stämme erst an die niedrigeren Konzentrationen im Rohton A adaptieren mußten.

Wie Beispiel 6 beweist, konnte eine Aktivierung der in Rohton A enthaltenen Schichtsilicate auch durch den Pilz Aspergillus niger vorgenommen werden. In diesem Fall mußte man dem Rohton als Nahrungsquelle Glucose zusetzen. Tabelle II ist zu entnehmen, daß Beispiel 6 bei der Bleichung von Sojaöl eine gegenüber Vergleichsbeispiel 1 erheblich verbesserte Chlorophyllentfernung und einen besseren Rotwert zeigt. Demgegenüber ergibt eine dem Stand der Technik entsprechende Behandlung von Rohton A mit Schwefelsäure (Vergleichsbeispiel 2) eine zwar fast genauso gute Absorption von Chlorophyll, aber sogar eine Verschlechterung des Rotwerts, was auf den geringen pH-Wert des Adsorptionsmittels und den damit verbundenen hohen Restsäureanteil zurückzuführen ist.

Die Beispiele 10 und 11 zeigen, daß neben pyrithaltigen Attapulguserden auch andere Schichtsilicate durch den Einsatz von Mikroorganismen aktiviert werden können.

Vergleichsbeispiel 7 zeigt bei der Bleichung sowohl von Rapsals auch Sojaöl recht schlechte Ergebnisse, was die Entfernung roter Bestandteile und insbesondere des Chlorophylls angeht. Laut Vergleichsbeispiel 8 gelingt durch eine dem Stand der Technik entsprechende Behandlung mit Schwefelsäure eine deutliche Verbesserung der Bleichaktivität (siehe Tabellen I und II).

Wird Rohton B lediglich inkubiert (Vergleichsbeispiel 9), so tritt keine Verbesserung der Bleichaktivität auf. Dies ist auf den Mangel an energieliefernden Begleitstoffen (wie z.B. Pyrit) in Rohton B und die damit in Zusammenhang stehende Abwesenheit diese Begleitstoffe verwertender Mikroorganismen (z.B. T. ferrooxidans) zurückzuführen.

Beispiel 10 zeigt, daß durch Zusatz von Pyrit als Energielieferant und Impfpopulationen von T. ferrooxidans und T. thiooxidans aus Rohton A sowie anschließender Inkubation eine Aktivierung des Schichtsilicats in Rohton B erreicht werden kann. Sowohl in Raps- (Tab. I) als auch Sojaöl (Tab. II) zeigt sich eine deutliche Verbesserung der Bleichwirkung im Vergleich zu Rohton B (Vergleichsbeispiel 7) und einem gemäß dem Stand der Technik aktivierten Rohton B (Vergleichsbeispiel 8). Die Dauer der Aktivierung ist z.B. gegenüber Beispiel 4 verlängert. Wahrscheinlich müssen sich die an die Bedingungen in Rohton A adaptierten Bakterien erst an die in Rohton B herrschenden Umweltbedingungen gewöhnen.

Aus Beispiel 11 ist ersichtlich, daß eine Aktivierung des Schichtsilicats in Rohton B auch durch das Angebot von elementarem Schwefel, Impfen mit inkubiertem Rohton A und anschließendem Inkubieren möglich ist. Die Aktivierungsdauer ist gegenüber Beispiel 10 weiter verlängert, da sich die Wildstammpopulationen von T. thiooxidans aus Rohton A nicht nur an die veränderten Bedingungen in Rohton B, sondern auch an die ungewohnte Energiequelle adaptieren müssen. Das gemäß Beispiel 11 aktivierte Schichtsilicat zeigt bei der Raps- und Sojaölbleichung gegenüber den Vergleichsbeispielen 7 und 8 verbesserte Aktivitäten. Im Vergleich zu Beispiel 10 wird eine geringere Bleichaktivität in beiden untersuchten Ölen gefunden; demgegenüber bietet Beispiel 11 die Möglichkeit einer Aktivierung ohne die Zugabe von Pyrit.

## Patentansprüche

1. Verfahren zur Aktivierung von Schichtsilicaten, wobei zur Aktivierung säureproduzierende Mikroorganismen verwendet werden.

2. Verfahren nach Anspruch 1, **dadurch gekennzeichnet, daß** als Schichtsilicat ein smektitisches Tonmineral verwendet wird.

3. Verfahren nach Anspruch 1 oder 2, **dadurch gekennzeichnet, daß** man als Schichtsilicat einen montmorillonithaltigen Ton, insbesondere Bentonit, verwendet.

4. Verfahren nach einem der vorstehenden Ansprüche, **dadurch gekennzeichnet, daß** man als Schichtsilicat einen Palygorskit-Ton, oder Gemische aus Palygorskit und Bentonit verwendet.

5. Verfahren nach einem der vorstehenden Ansprüche, **dadurch gekennzeichnet, daß** als Mikroorganismen schwefel- und/oder eisenoxidierende Bakterien, insbesondere Thiobacillus ferrooxidans und/oder Thiobacillus thiooxidans verwendet werden.

6. Verfahren nach einem der vorstehenden Ansprüche, **dadurch gekennzeichnet, daß** man als Mikroorganismen citronensäureproduzierende Mikroorganismen, insbesondere Aspergillus niger, verwendet.

7. Verfahren nach einem der vorstehenden Ansprüche, **dadurch gekennzeichnet, daß** es sich bei den Mikroorganismen um im Schichtsilicat vorkommende Wildtyp-Stämme oder kultivierte Stämme handelt.

8. Verfahren nach einem der vorstehenden Ansprüche, **dadurch gekennzeichnet, daß** der Ton zunächst in Stücke von etwa 0,5 cm bis etwa 5 cm, insbesondere etwa 2 cm gebrochen wird.

9. Verfahren nach einem der vorstehenden Ansprüche, **dadurch gekennzeichnet, daß** das Schichtsilicat mit einem Impfmaterial vermischt wird, der eine Bakterienpopulation von 10² bis 10¹⁰/g Impfmaterial aufweist.

10. Verfahren nach einem der vorstehenden Ansprüche, **dadurch gekennzeichnet, daß** dem Schichtsilicat Schwefel, Pyrit, Glucose, Melasse und/oder eine Nährsalzlösung für die Mikroorganismen zugesetzt wird.

11. Verfahren nach einem der vorstehenden Ansprüche, **dadurch gekennzeichnet, daß** die Behandlung mit den Mikroorganismen bei für diese günstigen wachstumsbedingungen, insbesondere bei etwa 20 bis 35°C und einem Wassergehalt von mehr als etwa 15 Gew.-% des Schichtsilicats durchgeführt wird.

12. Verfahren nach einem der vorstehenden Ansprüche, **dadurch gekennzeichnet, daß** der Ton während der Aktivierung mehrmals durchmischt und belüftet wird.

13. Verfahren nach einem der vorstehenden Ansprüche, **dadurch gekennzeichnet, daß** die mikrobielle Aktivierung über 1 bis etwa 365 Tage durchgeführt wird.

14. Aktivierte Schichtsilicate, erhältlich nach einem der vorstehenden Ansprüche.

15. Verfahren zum Bleichen von Ölen, Fetten oder Wachsen, das das In-Kontakt-Bringen des Öls mit Bleicherde, die durch ein Verfahren gemäß einem der Ansprüche 1 bis 14 erhältlich ist, umfaßt.

16. Verwendung von säureproduzierenden Mikroorganismen zur Herstellung von Bleicherden zur Behandlung von Ölen, Fetten oder Wachsen.

## Claims

1. A method for the activation of layered silicates, wherein acid-producing micro-organisms are used for the activation.

2. A method according to Claim 1, **characterised in that** a smectite clay mineral is used as the layered silicate.

3. A method according to Claim 1 or 2, **characterised in that** a montmorillonite-containing clay, in particular bentonite, is used as the layered silicate.

4. A method according to any one of the preceding Claims, **characterised in that** a palygorskite clay, or mixtures of palygorskite and bentonite, is used as the layered silicate.

5. A method according to any one of the preceding Claims, **characterised in that** sulphur-oxidising and/or iron-oxidising bacteria, in particular Thiobacillus ferro-oxidans and/or Thiobacillus thio-oxidans, are used as the micro-organisms.

6. A method according to any one of the preceding Claims, **characterised in that** citric-acid producing micro-organisms, in particular Aspergillus niger, are used as the micro-organisms.

7. A method according to any one of the preceding Claims, **characterised in that** the micro-organisms are Wild-type strains present in the layered silicate or cultivated strains.

8. A method according to any one of the preceding Claims, **characterised in that** the clay is initially crushed into pieces of approximately 0.5 cm to approximately 5 cm, in particular of approximately 2 cm.

9. A method according to any one of the preceding Claims, **characterised in that** the layered silicate is mixed with a seed material which has a bacteria population of from 10² to 10¹⁰/g of seed material.

10. A method according to any one of the preceding Claims, **characterised in that** sulphur, pyrite, glucose, molasses and/or a nutrient salt solution for the micro-organisms is/are added to the layered silicate.

11. A method according to any one of the preceding Claims, **characterised in that** the treatment with the micro-organisms is carried out under growth conditions favourable to them, in particular at approximately 20 to 35°C and with a water content of more than approximately 15 % by weight of the layered silicate.

12. A method according to any one of the preceding Claims, **characterised in that** the clay is thoroughly mixed and aerated a number of times during the activation.

13. A method according to any one of the preceding Claims, **characterised in that** the microbial activation is carried out over 1 to approximately 365 days.

14. Activated layered silicates which can be obtained in accordance with any one of the preceding Claims.

15. A method of bleaching oils, greases or waxes, which comprises bringing the oil into contact with bleaching earth which can be obtained using a method according to any of Claims 1 to 14.

16. Use of acid-producing micro-organisms for preparing bleaching earths for treating oils, greases or waxes.

## Revendications

1. Procédé pour activer des phyllosilicates, en utilisant des microorganismes produisant de l'acide pour l'activation.

2. Procédé selon la revendication 1, **caractérisé en ce qu'**on utilise comme phyllosilicate un minéral argileux smectique.

3. Procédé selon la revendication 1 ou 2, **caractérisé en ce qu'**on utilise comme phyllosilicate une argile contenant de la montmorillonite, en particulier de la bentonite.

4. Procédé selon l'une quelconque des revendications précédentes, **caractérisé en ce qu'**on utilise comme phyllosilicate une argile palygorskite ou des mélanges de palygorskite et de bentonite.

5. Procédé selon l'une quelconque des revendications précédentes, **caractérisé en ce qu'**on utilise comme microorganismes des bactéries oxydant le soufre et/ou le fer, en particulier Thiobacillus ferrooxidans et/ou Thiobacillus thiooxydans.

6. Procédé selon l'une quelconque des revendications précédentes, **caractérisé en ce qu'**on utilise comme microorganismes des microorganismes produisant de l'acide citrique, en particulier Aspergillus niger.

7. Procédé selon l'une quelconque des revendications précédentes, **caractérisé en ce que** les microorganismes sont des souches de type sauvage existant dans les phyllosilicates ou des souches cultivées.

8. Procédé selon l'une quelconque des revendications précédentes, **caractérisé en ce que** l'argile est d'abord concassée en morceaux d'environ 0,5 à 5 cm, en particulier d'environ 2 cm.

9. Procédé selon l'une quelconque des revendications précédentes, **caractérisé en ce que** le phyllosilicate est mélangé avec un matériau d'ensemencement qui présente une population de bactéries de 10² à 10¹⁰/g.

10. Procédé selon l'une quelconque des revendications précédentes, **caractérisé en ce que** le phyllosilicate est mélangé avec du soufre, de la pyrite, du glucose, de la mélasse et/ou une solution de sels nutritifs pour les microorganismes.

11. Procédé selon l'une quelconque des revendications précédentes, **caractérisé en ce que** le traitement avec les microorganismes est réalisé dans des conditions de croissance favorables pour lesdits microorganismes, en particulier à une température d'environ 20 à 35°C et à une teneur en eau supérieure à environ 15% en poids de phyllosilicate.

12. Procédé selon l'une quelconque des revendications précédentes, **caractérisé en ce que** l'argile est mélangée et aérée plusieurs fois pendant l'activation.

13. Procédé selon l'une quelconque des revendications précédentes, **caractérisé en ce que** l'activation microbienne dure 1 à environ 365 jours.

14. Phyllosilicates activés, pouvant être obtenus selon l'une quelconque des revendications précédentes.

15. Procédé pour le blanchiment d'huiles, de graisses ou de cires, comprenant la mise en contact de l'huile avec la terre de blanchiment, qui peut être obtenue par un procédé selon l'une quelconque des revendications précédentes.

16. Utilisation de microorganismes produisant de l'acide pour la préparation de terres de blanchiment pour le traitement d'huiles, de graisses ou de cires.
